(19) Europäisches Patentamt
European Patent Office
Office européen des brevets

(11) **EP 1 439 200 B1**

(12) **EUROPÄISCHE PATENTSCHRIFT**

(45) Veröffentlichungstag und Bekanntmachung des Hinweises auf die Patenterteilung:
**20.06.2007 Patentblatt 2007/25**

(51) Int Cl.:
*C08G 77/08* (2006.01)    *C08G 77/10* (2006.01)

(21) Anmeldenummer: **04000096.0**

(22) Anmeldetag: **07.01.2004**

(54) **Äquilibrierung von Siloxanen**

Equilibration of siloxanes

Procédé d'équilibrage de siloxanes

(84) Benannte Vertragsstaaten:
**AT BE BG CH CY CZ DE DK EE ES FI FR GB GR HU IE IT LI LU MC NL PT RO SE SI SK TR**

(30) Priorität: **16.01.2003 DE 10301355**

(43) Veröffentlichungstag der Anmeldung:
**21.07.2004 Patentblatt 2004/30**

(73) Patentinhaber: **Goldschmidt GmbH 45127 Essen (DE)**

(72) Erfinder:
• **Burkhart, Georg 45239 Essen (DE)**
• **Dröse, Jürgen 45141 Essen (DE)**
• **Dudzik, Horst 45326 Essen (DE)**
• **Klein, Klaus-Dieter, Dr. 45481 Mülheim (DE)**
• **Knott, Wilfried, Dr. 45141 Essen (DE)**
• **Möhring, Volker, Dr. 45470 Mülheim (DE)**

(56) Entgegenhaltungen:
**US-A- 3 694 405**

**Beschreibung**

Gegenstand der Erfindung ist ein Verfahren zur Herstellung von Äquilibrierungsprodukten von Organosiloxanen durch Umlagerung der Siloxanbindung an einen Kationenaustauscherharz, die so erhältlichen Organopolysiloxane sowie deren Verwendung.

Äquilibrierungen von Siloxanen an Ionenaustauscherharzen gehören zum Stand der Technik. Unter der Vielzahl bekannter Systeme ist der Amberlyst-Ionenaustauscher (insbesondere Amberlyst® 15) eine häufig genutzte katalytische Phase.

So beschreibt die DE-A-21 52 270, auf die auch im Hinblick auf die vorliegende Erfindung vollumfänglich Bezug genommen wird, ein Verfahren zur Herstellung von Äquilibrierungsprodukten von Organosiloxanen durch Umlagerung der Siloxanbindung an einem Kationenaustauscherharz, wobei man als Ausgangsmaterial benutztes Organosiloxan oder ein Organosiloxangemisch bei einer Temperatur von etwa 10 °C bis etwa 100 °C durch eine Packung fließen lässt, die als Kationenaustauscherharz ein makrovernetztes, Sulfonsäuregruppen enthaltendes Kationenaustauscherharz mit einem durchschnittlichen Porenvolumen von wenigstens etwa 0,01 cm$^3$ enthält und die ausgeflossenen Organosiloxane isoliert.

Neben der Herstellung nichtfunktioneller Polydimethylsiloxane wird dort die Möglichkeit zur Herstellung copolymerer Dimethyl-siloxan-poly(methyl)wasserstoffsiloxane durch Äquilibrierung eines Gemisches bestehend aus Methylhydrogenpolysiloxan, Hexamethyldisiloxan und Siloxancyclen an der makrovernetzten Ionenaustauscherphase Amberlyst® 15 beschrieben.

Nun sind copolymere Dimethylsiloxan-poly(methyl)wasserstoffsiloxane u.a. wertvolle Edukte bei der Herstellung von PU-Stabilisatoren, insbesondere für Heißweichschaumsysteme. Die Lehre der DE-A-21 52 270 aufgreifend, wurde versucht, ein bewährtes Stabilisatorsystem dadurch herzustellen, indem man zunächst ein Gemisch bestehend aus Hexamethyldisiloxan, Poly(methyl)wasserstoffsiloxan und Siloxancyclen unter der Einwirkung von Amberlyst® 15 als saurem Katalysator bei 95°C ins Äquilibriergleichgewicht überführt, und dann unter der katalytischen Wirkung eines Platinmetallkomplexes eine Mischung von Allylpolyethern unter Knüpfung von SiC-Bindungen an den Siloxanrücken anlagert.

Das hierbei gewonnene Polyethersiloxan fiel jedoch als trübe Flüssigkeit aus, deren stabilisierende Aktivität in der Verschäumung von Weichschaumsystemen derartig eingeschränkt ist, dass bei ihrer Verwendung als Stabilisator Kollaps hervorgerufen wird.

Die zu lösende technische Aufgabe bestand nun darin, ein System zu finden, das die Äquilibrierung von SiH-Gruppen tragenden Siloxanen so gestattet, dass diese Nachteile auf dem Weg der Weiterverarbeitung vermieden werden.

Die vorgenannte Aufgabe wird in einer Ausführungsform gelöst durch ein Verfahren zur Herstellung von Äquilibrierungsprodukten von Organosiloxanen durch Umlagerung der Siloxanbindung an einem Kationenaustauscherharz, wobei man ein als Ausgangsmaterial benutztes Organosiloxan oder ein Organosiloxangemisch bei einer Temperatur von 10 °C bis 120 °C mit einem makrovernetzten, Sulfonsäuregruppen enthaltenden Kationenaustauscherharz in Kontakt bringt und die erhaltenen äquilibrierten Organosiloxane isoliert, dadurch gekennzeichnet, dass man ein Kationenaustauscherharz mit einer spezifischen Oberfläche von ≥ 35 m$^2$/g einsetzt, dessen mittlerer Porendurchmesser wenigstens 65 nm beträgt.

Überraschenderweise wurde gefunden, dass beispielsweise Lewatit® K 2621 als sulfonsaures Ionenaustauscherharz die zeitadäquat zügige Einstellung des Äquilibriergleichgewichtes ermöglicht und dass die so gewonnenen Wasserstoffsiloxane vorzügliche Ausgangsmaterialien zur Herstellung von Polyurethan-Weichschaumstabilisatoren sind.

Dieser Befund ist für den Fachmann überraschend, da dieses polymere Harz als makroporöses sulfoniertes Polystyrol eine identische chemische Grundstruktur wie Amberlyst® 15 besitzt und darüber hinaus auch ähnliche makroskopische Eigenschaften zeigt, wie in Tabelle I wiedergegeben ist:

Tabelle I:

| Ionenaustauscherharz | Oberfläche [m$^2$/g] | Mittlerer Porendurchmesser [nm] |
|---|---|---|
| Amberlyst® 15 | 45 | 25 |
| Lewatit® K 2621 | 40 | 65 |

In einer bevorzugten Ausführungsform ist das Verfahren dadurch gekennzeichnet, dass man niedermolekulare, insbesondere lineare Organopolysiloxane depolymerisiert und äquilibriert. Insbesondere isoliert man ein Organosiloxan, das sich im Gleichgewicht der chemischen Verbindungen befindet. Es wird insbesondere ein Organosiloxan als Ausgangsmaterial verwendet, dessen Viskosität bis zu etwa 10.000 cP beträgt.

Vorzugsweise werden Siloxane und H-Siloxane eingesetzt, die 3 bis 200 Si-Atome aufweisen.

Die Umlagerung wird vorzugsweise bei einer Temperatur von etwa 35 °C bis etwa 100 °C durchgeführt.

Erfindungsgemäß wird das Verfahren in einer weiteren Ausführungsform kontinuierlich durchgeführt; man trennt aus dem ausfließenden Organosiloxangemisch eine Fraktion mit dem gewünschten Siedebereich ab, führt die Fraktion mit dem nicht gewünschten Siedebereich in die Einspeisung aus Organosiloxanen zurück.

Insbesondere wird als Ausgangsmaterial ein Gemisch aus Hexamethyldisiloxan, Poly(methyl)wasserstoffsiloxan und Siloxancyclen verwendet.

Eine weitere Ausführungsform ist die Verwendung von Organosiloxanen zur Knüpfung von SiC-Bindungen, wobei man ein Gemisch dieser Organosiloxane und Allylpolyether mit einem Platinmetallkomplex in Kontakt bringt und das gewonnene Polysiloxan als Polyurethan-Weichschaumstabilisator einsetzt.

Mit Hilfe der vorliegenden Erfindung ist es möglich, statistisch einheitlich aufgebaute Organowasserstoffsiloxane mit definiertem Gleichgewicht von linearen und cyclischen Verbindungen durch Äquilibrierung eines Gemisches von Methylwasserstoffpolysiloxan und cyclischen oder linearen, gegebenenfalls Wasserstoff-funktionalisierten Polysiloxanen unter Verwendung eines definierten makrovernetzten, Sulfonsäuregruppen-enthaltenden Kationenaustauscherharzes herzustellen. In Bezug auf diese und weitere Definitionen wird ausdrücklich auf die DE-A-21 52 270 Bezug genommen.

Es gilt festzustellen, dass durchgängig alle Weichschaumstabilisatoren (Polyethersiloxane), die auf der Basis von Amberlyst® 15, Purolite® CT 169 D (Oberfläche 35 bis 50 $m^2$/g, mittlerer Porendurchmesser 24,0 bis 42,5 nm) oder Purolite® CT 165 (Oberfläche 2,5 $m^2$/g, mittlerer Porendurchmesser > 100), als Ionenaustauschersystem hergestellt wurden, trübe Flüssigkeiten sind, die zum Kollaps des PU-Schaums führen. Wesentliche Parameter zur Beschreibung der erfindungsgemäß einzusetzenden Katalysatorphasen sind also die spezifische Oberfläche und die Porosität, d. h. der mittlere Porendurchmesser. Bildet man aus beiden Größen ein Produkt, so hat dieses den Charakter einer inversen Dichte (Volumen: Masse) und erlaubt eine saubere Differenzierung der funktionsfähigen von nichterfindungsgemäß einzusetzenden Ionenaustauschern.

Am beispielhaft eingesetzten Ionenaustauscher Lewatit® K 2621 sieht die Betrachtung wie folgt aus:

$$40 \ m^2/g \ x \ 65 \ nm = 2.600 \ m^2 \ nm/g = 2,6 \ x \ 10^{-3} \ m^3/kg.$$

Anhand folgender Beispiele soll der Vorteil der vorliegenden Erfindung aufgezeigt werden.

Ausführungsbeispiele:

Vorbereitung der im erfindungsgemäßen und im nicht erfindungsgemäßen Beispiel eingesetzten sulfonsauren Ionenaustauscherharze Lewatit® K-2621 wurde in der handelsüblichen stark wasserhaltigen Form in offenen Abdampfschalen für einen Zeitraum von 18 Stunden in einen auf 60 °C beheizten Trockenschrank gestellt und dann in noch warmen Zustand in inertisierte Gefäße unter Feuchtigkeitsausschluss überführt und aufbewahrt.

Amberlyst® 15 wurde in der handelsüblichen 5 % Wasser enthaltenden Form direkt eingesetzt.

Beispiel 1:

Herstellung eines Wasserstoffsiloxans (erfindungsgemäßes Beispiel)

Ein Gemisch bestehend aus 223,0 g Decamethylcyclopentasiloxan ($D_5$) 20,2 g Poly(methyl)wasserstoffsiloxan PTF1 (SiH-Gehalt: 15,75 Val/kg) und 6,9 g Hexamethyl-disiloxan HMDS (61,5 mol $D_5$ : 0,135 mol PTF1 : 0,865 mol HMDS) wurde mit 3 m-% vorgetrockneten Ionenaustauscherharz Lewatit® K-2621 versetzt und für 6 Stunden bei 95 °C unter ständigem Rühren äquilibriert und nach Abkühlen des Reaktionsgemisches wird das Ionenaustauscherharz durch Filtration abgetrennt. Der Gehalt an aktivem SiH wurde mit Hilfe der Gasvolumetrie (Zersetzung einer eingewogenen Siloxanprobe mit Hilfe einer Natriumbutylatlösung) zu 1,26 Val/kg bestimmt. Die Viskosität des Wasserstoffsiloxans lag bei 86,4 mPas (25 °C) .

Die $^{29}$Si-NMR-Spektroskopie wies dem erfindungsgemäß gewonnenen Wasserstoffsiloxan eine mittlere Struktur zu, die sich durch folgende Formel wiedergeben ließ:

$$(CH_3)SiO\text{-}[(CH_3)_2SiO\text{-}]_{61,5}[(CH_3)HSiO\text{-}]_{6,5}Si(CH_3)_3$$

Vergleichsbeispiel 1:

Herstellung eines Wasserstoffsiloxans

Ein Gemisch bestehend aus 223,0 g Decamethylcyclopentasiloxan ($D_5$) , 20,2 g Poly(methyl)wasserstoffsiloxan PTF1 (SiH-Gehalt: 15,75 Val/kg) und 6,9 g Hexamethyl-disiloxan HMDS (61,5 mol $D_5$ : 0,135 mol PTF1 : 0,865 mol HMDS) wurde mit 3 m-% Ionenaustauscherharz Amberlyst® 15 versetzt und für 6 Stunden bei 95 °C unter ständigem Rühren äquilibriert und nach Abkühlen des Reaktionsgemisches das Ionenaustauscherharz durch Filtration abgetrennt. Der Gehalt an aktivem SiH wurde mit Hilfe der Gasvolumetrie zu 1,26 Val/kg bestimmt. Die Viskosität des Wasserstoffsiloxans lag bei 80,3 mPas (25 °C) .

Die $^{29}$Si-NMR-Spektroskopie wies dem so gewonnenen Wasserstoffsiloxan folgende mittlere Struktur zu:

$$(CH_3)SiO-[(CH_3)_2SiO-]_{61,5}[CH_3)HSiO-]_{6,5}Si(CH_3)_3$$

Beispiel 2:

(Weiterverarbeitung des in Beispiel 1 gewonnenen Wasserstoffsiloxans zu einem Polysiloxan-Polyoxyalkylen-Blockmischcopolymerisat)

In einem mit Tropftrichter, Rührer, Thermometer, Gaseinleitung und Rückflusskühler versehenen Kolben wurden 259,2 g (0,185 Mol) eines Polyethers der mittleren Formel

$$CH_2=CH-CH_2O- (C_2H_4O-)_5 (C_3H_6O-)_{21}CH_3,$$

86,4 g (0,062 Mol) eines Polyethers der mittleren Formel

$$CH_2=CH-CH_2O- (C_2H_4O-)_{26} (C_3H_6O-)_4CH_3;$$

234,5 g (0,061 Mol) eines Polyethers der mittleren Formel

$$CH_2=CH-CH_2O- (C_2H_4O-)_{45} (C_3H_6O-)_{34}CH_3;$$

156,4 g (0,041 Mol) eines Polyethers der mittleren Formel

$$CH_2=CH-CH_2O- (C_2H_4O-)_{36}(C_3H_6O-)_{38}H \text{ und}$$

37,0 g (0,061 Mol) eines Polyethers der mittleren Formel

$$CH_2=CH-CH_2O- (C_2H_4O-)_{14}CH_3$$

gemeinsam mit 15,4 mg cis-$(NH_3)_2PtCl_2$ vorgelegt. Die Apparatur wurde durch einen leichten Stickstoffstrom inertisiert. Nach Aufheizen auf 120 °C wurden 240 g (= 0,301 Mol SiH) des Wasserstoffsiloxans aus Beispiel 1 im Verlauf von 30 Minuten zugetropft. Man ließ das Reaktionsgemisch 3 Stunden nachreagieren und erzielte einen quantitativen SiH-Umsatz (gasvolumetrisch bestimmt durch Umsetzung mit Natriumbutylat-Lösung). Man erhielt nach Filtration über eine Seitz-K-300-Filterscheibe ein klares, leicht gelbliches Produkt.

Vergleichsbeispiel 2:

(Weiterverarbeitung des in Vergleichsbeispiel 1 gewonnenen Wasserstoffsiloxans zu einem Polysiloxan-Polyoxyalkylen-Blockmischcopolymerisat)

Analog Beispiel 2 wurden in einem mit Tropftrichter, Rührer, Thermometer, Gaseinleitung und Rückflusskühler versehenen Kolben 259,2 g (0,185 Mol) eines Polyethers der mittleren Formel

$$CH_2=CH-CH_2O- (C_2H_4O-)_5 (C_3H_6O-)_{21}CH_3,$$

86,4 g (0,062 Mol) eines Polyethers der mittleren Formel

$$CH_2=CH-CH_2O- (C_2H_4O-)_{26} (C_3H_6O-)_4CH_3,$$

234,5 g (0,061 Mol) eines Polyethers der mittleren Formel

$$CH_2=CH-CH_2O-(C_2H_4O-)_{45}(C_3H_6O-)_{34}CH_3,$$

156,4 g (0,041 Mol) eines Polyethers der mittleren Formel

$$CH_2=CH-CH_2O- (C_2H_4O-)_{36}(C_3H_6O-)_{38}H \text{ und}$$

37,0 g (0,061 Mol) eines Polyethers der mittleren Formel

$$CH_2=CH-CH_2O- (C_2H_4O-)_{14}CH_3$$

gemeinsam mit 15,4 mg cis-$(NH_3)_2PtCl_2$ vorgelegt. Die Apparatur wurde durch einen leichten Stickstoffstrom inertisiert. Nach Aufheizen auf 120 °C wurden 240 g (= 0,301 Mol SiH) des nicht erfindungsgemäßen Wasserstoffsiloxans aus Vergleichsbeispiel 1 im Verlauf von 30 Minuten zugetropft. Man ließ das Reaktionsgemisch 3 Stunden nachreagieren und erzielte einen quantitativen SiH-Umsatz (gasvolumetrisch bestimmt durch Umsetzung mit Natriumbutylat-Lösung). Trotz des quantitativen SiH-Umsatzes war das erhaltene Polysiloxan-Polyether-Copolymer eine trübopaque, leicht gelbliche Flüssigkeit, die auch nach Filtration über eine Seitz-K-300-Filterscheibe nicht klar wurde.

Beispiel 3/Vergleichsbeispiel 3:

Die anwendungstechnische Prüfung der hergestellten Schaumstabilisatoren erfolgte mit einer Schaumrezeptur auf folgende Weise:

Jeweils 300 Teile eines handelsüblichen Polyethers zur Herstellung von flexiblen Polyurethanschaumstoffen, welcher im mittleren Molekül drei Hydroxylgruppen aufwies und ein Molekulargewicht von 3.500 hatte, wurden mit 15 Teilen Wasser, 15 Teilen eines physikalischen Treibmittels, der entsprechenden Menge des zu testenden Schaumstabilisators gemäß dem erfindungsgemäßen Beispiel 2 bzw. dem Vergleichsbeispiel 2, 0,33 Teilen Diethylentriamin und 0,69 Teilen Zinnoctoat unter gutem Rühren vermischt. Nach Zugabe von 189 Teilen Toluoldiisocyanat (Isomerengemisch 2,4 und 2,6 im Verhältnis 4 : 1) wurde mit einem Glattrührer 7 Sekunden bei 2.500 U/Min. gerührt und das Gemisch in einen oben offenen Kasten gegossen. Es entstand ein feinporiger Schaumstoff, der durch folgende Parameter charakterisiert wurde:

1. Das Rücksacken des Schaumstoffes am Ende der Steigphase (in Tabelle II als "Rückfall" bezeichnet).

2. Die Zahl der Zellen pro Zentimeter Schaum, die man mikroskopisch ermittelte.

Die Tabelle II stellt die Messwerte für 2 verschiedene Konzentrationen (1,8 Teile/1,5 Teile) des nach erfindungsgemäßem Verfahren gewonnenen (Beispiel 2) sowie des nicht erfindungsgemäß hergestellten Stabilisators (Produkt des Vergleichsbeispiels 2) gegenüber.

Tabelle II:

| Beispiel | Rückfall | Zellen pro Zentimeter |
|---|---|---|
| Beispiel 3 | 0,7 / 1,4 | 15 |
| Vergleichsbeispiel 3 | Kollaps | n.b. |

## Patentansprüche

**1.** Verfahren zur Herstellung von Äquilibrierungsprodukten von Organosiloxanen durch Umlagerung der Siloxanbindung an einem sulfonsauren Kationenaustauscherharz, wobei man ein als Ausgangsmaterial benutztes Organosiloxan oder ein Organosiloxangemisch bei einer Temperatur von 10 °C bis 120 °C mit einem makrovernetzten, Sulfonsäuregruppen enthaltenden Kationenaustauscherharz in Kontakt bringt und die erhaltenen äquilibrierten Organosiloxane isoliert, **dadurch gekennzeichnet, dass** man ein Kationenaustauscherharz mit einer spezifischen

Oberfläche von ≥ 35 m$^2$/g einsetzt, dessen Porendurchmesser wenigstens 65 nm beträgt.

2. Verfahren nach Anspruch 1, **dadurch gekennzeichnet, dass** man niedermolekulare Organopolysiloxane depolymerisiert.

3. Verfahren nach Anspruch 1, **dadurch gekennzeichnet, dass** man niedermolekulare Organopolysiloxane äquilibriert.

4. Verfahren nach Anspruch 1, 2 und 3, **dadurch gekennzeichnet, dass** man als Lösungsmittel einen aliphatischen Kohlenwasserstoff verwendet.

5. Verfahren nach Anspruch 1 bis 4, **dadurch gekennzeichnet, dass** man ein Organopolysiloxan isoliert, das sich im Gleichgewicht der chemischen Verbindungen befindet.

6. Verfahren nach Anspruch 1 bis 5, **dadurch gekennzeichnet, dass** man die Umlagerung bei einer Temperatur von etwa 35 bis etwa 100 °C durchführt.

7. Verfahren nach Anspruch 1 bis 6, **dadurch gekennzeichnet, dass** man Organosiloxane als Ausgangsmaterial verwendet, deren Viskosität bis zu etwa 10.000 cP beträgt.

8. Verfahren nach Anspruch 1 bis 7, **dadurch gekennzeichnet, dass** man ein Kationenaustauscherharz verwendet, dessen durchschnittliche spezifische Oberfläche einen Wert zwischen 35 und 50 m$^2$/g beträgt.

9. Verfahren nach Anspruch 1 bis 8, **dadurch gekennzeichnet, dass** man das Verfahren kontinuierlich durchführt, aus dem erhaltenen Organosiloxangemisch eine Fraktion mit dem gewünschten Siedebereich abtrennt und die Fraktion mit dem nicht gewünschten Siedebereich in die Einspeisung aus Organosiloxanen zurückführt.

10. Verfahren nach Anspruch 1 bis 9, **dadurch gekennzeichnet, dass** man ein Gemisch aus Hexamethyldisiloxan, Poly-(methyl)wasserstoffsiloxan und Siloxancyclen als Ausgangsmaterial verwendet.

11. Organopolysiloxane erhältlich nach einem Verfahren gemäß Anspruch 1 bis 10.

12. Verwendung von Organosiloxanen nach Anspruch 11 zur Knüpfung von SiC-Bindungen, wobei man ein Gemisch dieser Organosiloxane, Allylpolyether mit einem Platinmetallkomplex in Kontakt bringt.

13. Verwendung nach Anspruch 12, wobei man das gewonnene Polysiloxan als Polyurethan-Weichschaumstabilisator einsetzt.

**Claims**

1. Process for the preparation of equilibration products of organosiloxanes by rearrangement of the siloxane bond on a cation exchange resin containing sulfo groups, an organosiloxane used as starting material or an organosiloxane mixture being brought into contact with a macrocrosslinked cation exchange resin containing sulfo groups at a temperature of 10°C to 120°C, and the equilibrated organosiloxanes obtained being isolated, **characterized in that** a cation exchange resin having a specific surface area ≥ of 35 m$^2$/g whose mean pore diameter is at least 65 nm is used.

2. Process according to Claim 1, **characterized in that** low molecular weight organopolysiloxanes are depolymerized.

3. Process according to Claim 1, **characterized in that** low molecular weight organopolysiloxanes are equilibrated.

4. Process according to any of Claims 1, 2 and 3, **characterized in that** the solvent used is an aliphatic hydrocarbon.

5. Process according to any of Claims 1 to 4, **characterized in that** an organopolysiloxane which is present in the equilibrium of the chemical compounds is isolated.

6. Process according to any of Claims 1 to 5, **characterized in that** the rearrangement is carried out at a temperature of about 35 to about 100°C.

7. Process according to any of Claims 1 to 6, **characterized in that** organosiloxanes whose viscosity is up to about 10 000 cP are used as starting material.

8. Process according to any of Claims 1 to 8, **characterized in that** a cation exchange resin whose average specific surface area is a value between 35 and 50 m$^2$/g is used.

9. Process according to any of Claims 1 to 8, **characterized in that** the process is carried out continuously, a fraction having the desired boiling range is separated from the organosiloxane mixture obtained and the fraction having the undesired boiling range is recycled into the feed comprising organosiloxanes.

10. Process according to any of Claims 1 to 9, **characterized in that** a mixture of hexamethyldisiloxane, poly(methyl)-hydrogensiloxane and siloxane cycles is used as starting material.

11. Organopolysiloxanes obtainable by a process according to any of Claims 1 to 10.

12. Use of organosiloxanes according to Claim 11 for the linkage of SiC bonds, a mixture of these organosiloxanes and allylpolyethers being brought into contact with a platinum metal complex.

13. Use according to Claim 12, the polysiloxane obtained being used as a flexible polyurethane foam stabilizer.

**Revendications**

1. Procédé de préparation de produits d'équilibrage d'organosiloxanes par déplacement de la liaison siloxane sur une résine échangeuse de cations à l'acide sulfonique, dans lequel on met en contact un organosiloxane ou un mélange d'organosiloxanes utilisés comme matériau de départ, à une température de 10° C à 120° C, avec une résine échangeuse de cations macroréticulée et contenant des groupes acide sulfonique, et on isole les organosiloxanes équilibrés ainsi obtenus, **caractérisé en ce que** l'on utilise une résine échangeuse de cations dont la surface spécifique est ≥ 35 m$^2$/g dont le diamètre moyen des pores est d'au moins 65 nm.

2. Procédé selon la revendication 1, **caractérisé en ce que** l'on dépolymérise des organopolysiloxanes à bas poids moléculaire.

3. Procédé selon la revendication 1, **caractérisé en ce que** l'on équilibre des organopolysiloxanes à bas poids moléculaire.

4. Procédé selon les revendications 1, 2 et 3, **caractérisé en ce que** comme solvant, on utilise un hydrocarbure aliphatique.

5. Procédé selon les revendications 1 à 4, **caractérisé en ce que** l'on isole un organopolysiloxane dont les liaisons chimiques sont à l'équilibre.

6. Procédé selon les revendications 1 à 5, **caractérisé en ce que** l'on réalise le déplacement à une température comprise entre environ 35 et environ 100° C.

7. Procédé selon les revendications 1 à 6, **caractérisé en ce que** l'on utilise comme matériau de départ des organosiloxanes dont la viscosité peut atteindre environ 10 000 cP.

8. Procédé selon les revendications 1 à 7, **caractérisé en ce que** l'on utilise une résine échangeuse de cations dont la surface spécifique moyenne a une valeur comprise entre 35 et 50 m$^2$/g.

9. Procédé selon les revendications 1 à 8, **caractérisé en ce que** l'on exécute le procédé en continu, **en ce que** l'on sépare du mélange d'organopolysiloxanes obtenu une fraction qui présente la plage d'ébullition souhaitée et **en ce que** l'on renvoie dans l'alimentation en organosiloxanes la fraction dont la plage d'ébullition n'est pas celle souhaitée.

10. Procédé selon les revendications 1 à 9, **caractérisé en ce que** comme matériau de départ, on utilise un mélange d'hexaméthyldisiloxane, de poly(méthyl)hydrogénosiloxane et des siloxanes cycliques.

11. Organopolysiloxanes obtenus avec un procédé selon les revendications 1 à 10.

12. Utilisation d'organosiloxanes selon la revendication 11 pour lier des liaisons SiC en mettant en contact un mélange de ces organosiloxanes et d'allylpolyéther avec un complexe métallique du platine.

13. Utilisation selon la revendication 12, dans lequel on utilise le polysiloxane ainsi obtenu comme stabilisateur de mousse molle de polyuréthane.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2152270 A